# EUROPEAN PATENT APPLICATION

(11) **EP 4 800 368 A1**
(43) Date of publication of application: **02.09.2026**
(21) Application number: 23956732.4
(22) Date of filing: 23.10.2023
(51) Int. Cl.: G01M 17/007

(54) **CHASSIS DYNAMOMETER**

(71) Applicant: TMEIC Corporation, Tokyo 104-0031 (JP)
(72) Inventor: URATA, Yohei, Tokyo 104-0031 (JP); OHTSUKA, Junji, Tokyo 104-0031 (JP); NISHIMIYA, Kazuhiko, Tokyo 104-0031 (JP)
(74) Representative: TBK
(86) International application number: PCT/JP2023/038191
(87) International publication number: WO 2025/088674

(57) **Abstract**

The present disclosure has an object of providing a structure of a chassis dynamometer designed to downsize the installation space. A roller (2) in a roller device (100) included in a chassis dynamometer according to this disclosure includes a motor (2) in a roller outer framework (10). In the motor (2), the rotation shaft (21) is attached to the roller outer framework (10) so that the rotation shaft (21) can rotate in conjunction with a rotation operation of the motor rotor (71). An oscillating shaft (21) that does not move in conjunction with the rotation operation of the motor rotor (71) is attached to a stator structure (72). A rotation bearing stand (11) supports the rotation shaft (21), and an oscillating bearing stand (12) supports the oscillating shaft (22). A cooling fan (50) that supplies cooling air (F2) to the motor (7) is disposed outside the roller (2).

## Description

### TECHNICAL FIELD

The present disclosure relates to a chassis dynamometer to be used in various driving tests on vehicles.

### BACKGROUND ART

Chassis dynamometers have conventionally been used in driving tests on vehicles (automobiles), and each include roller devices as main constituent elements. The chassis dynamometer also includes a vehicle immobilization mechanism that secures a vehicle placed on the roller devices when the driving test is performed. Examples of the conventional chassis dynamometers include the chassis dynamometer disclosed in Patent Document 1.

Various driving tests involving steering operations in vehicles require roller rotation operations of rotating rollers to be adapted to operations of rotating tires. Specifically, the roller rotation operations are necessary to implement a control method for causing the roller devices for right and left tires to follow a tire turning angle in a steering operation. The control method is applicable to automated driving or ADAS simulation driving tests. "ADAS" denotes an advanced driver assistance system, and is a system that detects, for example, the possibility of accidents in advance and avoids the accidents.

Examples of the chassis dynamometers with the roller rotation functions include the chassis dynamometer included in the vehicle testing apparatus disclosed in Patent Document 2.

### [Roller devices 200]

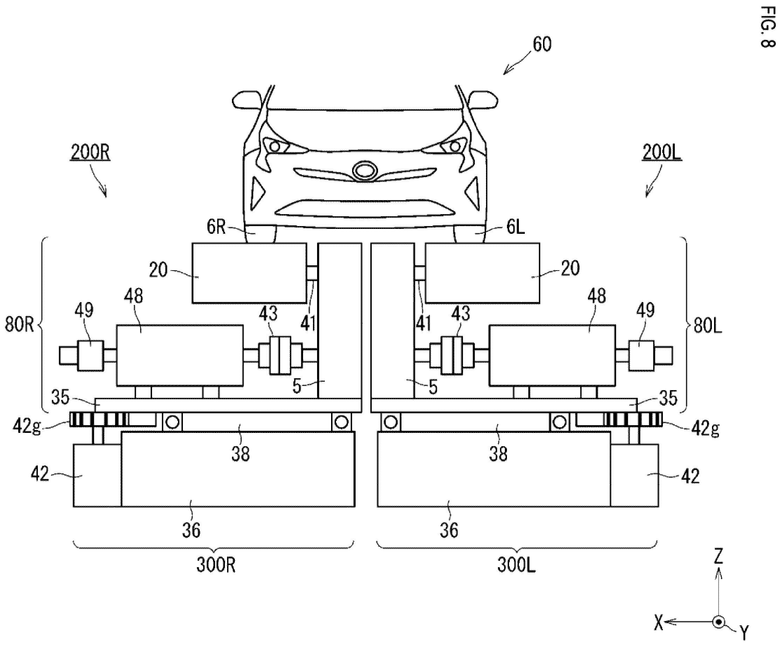

FIG. 8 is a front view schematically illustrating roller devices 200 to be used in a conventional chassis dynamometer with a roller rotation function, which is typified by Patent Document 2. FIG. 8 is a front view when viewed from the front (+Y direction). FIG. 8 illustrates the XYZ rectangular coordinate system. When a steering operation initiates tire rotation operations of rotating two front-wheel tires 6 (6R, 6L) of a vehicle 60, at least the roller devices 200 in FIG. 8 are used as two front-wheel roller devices.

The roller devices 200 include a roller device 200R for the front-right-wheel tire 6R, and a roller device 200L for the front-left-wheel tire 6L. Of the roller device 200R and the roller device 200L, the roller device 200L will be hereinafter described as a representative.

As illustrated in FIG. 8, the roller device 200L includes a roller rotation mechanism 300L and a roller driving mechanism 80L as main constituent elements.

The roller rotation mechanism 300L includes, as main constituent elements, a fixed base 36, a rotation motor 42, and a rotation bearing 38. The rotation bearing 38 is disposed on the fixed base 36, and the rotation motor 42 is attached adjacent to the side surface of the fixed base 36.

The rotation motor 42 is a motor with gears that can control a speed. Gears 42g are attached at the end of the rotation motor 42 to be engaged in gears attached around the outer periphery of a rotation base 35. Thus, rotating the rotation motor 42 can rotate the rotation base 35.

The rotation bearing 38 rotatably supports the rotation base 35, and rotates the rotation base 35 with the power of the rotation motor 42, using the center of the rotation bearing 38 as a pivot. As such, the roller rotation mechanism 300L includes the rotation base 35 rotated by the rotation motor 42.

The roller driving mechanism 80L above the roller rotation mechanism 300L rotates in conjunction with the rotation of the rotation base 35 in the roller rotation mechanism 300L. Thus, the roller rotation mechanism 300L can execute a roller rotation operation of rotating a pair of rollers 20.

Next, the roller driving mechanism 80L will be described. The roller driving mechanism 80L including the pair of rollers 20 is disposed on the rotation base 35.

The roller driving mechanism 80L supporting a twin-roller structure includes, as main constituent elements, a roller driving motor 48, an encoder 49, a coupling 43, a reduction gear 5 such as a gear box, the pair of rollers 20, and rotation axes 41. Here, the rotation axes 41 are a pair of the rotation axes 41 to correspond to the pair of rollers 20.

The roller driving motor 48 and the reduction gear 5 are fixed on the rotation base 35. The pair of rotation axes 41 is rotationally driven by the roller driving motor 48 as a driving source through the coupling 43 and the reduction gear 5. Specifically, branching a rotation operation transmission function into two in the reduction gear 5 allows the pair of rotation axes 41 to be rotationally driven. Furthermore, the encoder 49 measures rotation speeds of the pair of rollers 20, based on the rotation speed of the roller driving motor 48. The measurement result of the encoder 49 is used as a feedback signal for controlling the roller driving motor 48.

Although FIG. 8 omits the illustration, a pair of roller bearing stands is disposed on the rotation base 35 across the roller driving motor 48. The pair of rotation axes 41 rotatably supports the pair of rollers 20 between the reduction gear 5 and the pair of roller bearing stands.

Installing the pair of rotation axes 41 through the respective centers of the pair of rollers 20 can execute rotation operations of the pair of rollers 20 together with rotations of the pair of rotation axes 41.

Thus, the roller driving mechanism 80L can execute a roller driving operation of rotationally driving a front roller 20F that is a first roller, and a roller driving operation of rotationally driving a rear roller 20B that is a second roller.

The roller driving mechanism 80L may have the twin-roller structure by disposing, on the rotation base 35, two of the roller driving mechanisms 80L each supporting a single roller structure.

The roller device 200R is disposed on the rotation base 35 similarly to the roller device 200L, and includes a roller rotation mechanism 300R and a roller driving mechanism 80R as main constituent elements. The structure of the elements and details of operations in the roller rotation mechanism 300R are identical to those of the roller rotation mechanism 300L. The structure of the elements and details of operations in the roller driving mechanism 80R are identical to those of the roller driving mechanism 80L.

Hereinafter, the roller devices 200L and 200R may be collectively simply referred to as a "roller device 200". The pair of rollers 20L and 20R may be collectively simply referred to as a "pair of rollers 20".

Furthermore, the roller driving mechanisms 80L and 80R may be collectively simply referred to as a "roller driving mechanism 80". The roller rotation mechanisms 300L and 300R may be collectively simply referred to as a "roller rotation mechanism 300".

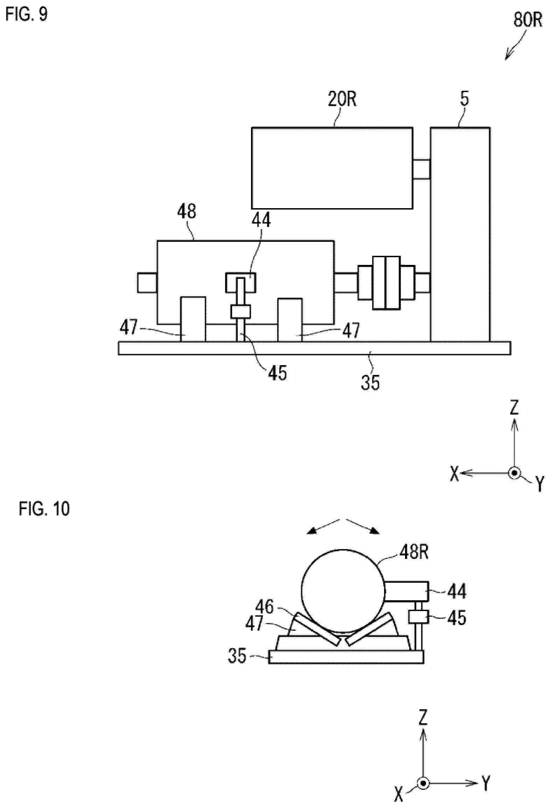

FIGS. 9 and 10 schematically illustrates a torque measurement mechanism in the roller driving mechanism 80R. Each of FIGS. 9 and 10 illustrates the XYZ rectangular coordinate system.

As illustrated in FIGS. 9 and 10, the roller driving motor 48 is supported on the rotation base 35 through oscillating bearings 47 and oil films 46. As illustrated in FIG. 9, two combinations of the oscillating bearings 47 and the oil films 46 are provided for the roller driving motor 48.

Since the roller driving motor 48 supported through the oil films 46 is suspended above the rotation base 35, the roller driving motor 48 has characteristics of reducing losses in a rotation direction.

A load cell 45 is attached on the side surface of the roller driving motor 48 through a torque arm 44. When a reaction force is generated in the rotation direction of the roller driving motor 48 in the driving test on the vehicle 60, the roller driving motor 48 is free supported in the rotation direction. Thus, the load cell 45 can measure the reaction force of the roller driving motor 48.

Obviously, the roller driving mechanism 80L also has the torque measurement mechanism, similarly to the roller driving mechanism 80R.

### PRIOR ART DOCUMENTS

### PATENT DOCUMENTS

Patent Document 1: Japanese Patent Application Laid-Open No. S53-1579
Patent Document 2: Japanese Patent Application Laid-Open No. 2023-89808

### SUMMARY

### PROBLEM TO BE SOLVED BY THE INVENTION

In the conventional chassis dynamometer illustrated in FIGS. 8 to 10, each of the roller devices 200 requires the roller driving mechanism 80 for rotationally driving the pair of rollers 20. The roller driving mechanism 80 requires constituent elements relatively large in size, for example, the roller driving motor 48 and the reduction gear 5.

The roller devices 200 are normally disposed in a region called an underground pit beneath the floor level on which the vehicle 60 is placed. Since the device size of the roller devices 200 is large, the large space for installing the roller devices 200 needs to be reserved by implementing measures, for example, installing the underground pit deeper.

For example, the conventional chassis dynamometer illustrated in FIG. 8 needs to have the roller driving mechanism 80R for the tire 6R and the roller driving mechanism 80L for the tire 6L. Thus, a dimension in the height direction (Z direction) needs to be increased to make up for limitations in the dimension in the width direction (X direction). Consequently, the reduction gear 5 that is a power transmission mechanism needs to increase the dimension in the height direction by the reduced dimension in the width direction.

As such, the conventional chassis dynamometers have a problem of widening the installation space too much by an increase in the device size of the roller devices 200.

This disclosure has been conceived to solve the problem, and has an object of providing a structure of a chassis dynamometer designed to downsize the installation space.

### MEANS TO SOLVE THE PROBLEM

A chassis dynamometer according to the present disclosure is a chassis dynamometer including a roller device, the roller device including: a roller on which a tire of a vehicle is placed; and a cooler disposed outside the roller, the roller including: a roller outer framework; and a motor disposed inside the roller outer framework, the motor including: a motor rotor; a stator structure disposed around the motor rotor; a rotation shaft coupled to the motor rotor; and an oscillating shaft coupled to the stator structure, the rotation shaft facing the oscillating shaft with respect to the roller, the roller device further including: a rotation bearing stand rotatably supporting the rotation shaft; and an oscillating bearing stand pivotably supporting the oscillating shaft, wherein the rotation shaft rotates in conjunction with a rotation operation of the motor rotor, the oscillating shaft does not move in conjunction with the rotation operation of the motor rotor, the rotation shaft is attached to the roller outer framework so that the roller outer framework can rotate, the roller outer framework includes a roller opening, and the cooler supplies cooling air to the motor through the roller opening of the roller outer framework.

### EFFECTS OF THE INVENTION

Since the roller included in the roller device of the chassis dynamometer according to the present disclosure includes the motor in the roller outer framework, the rotation shaft of the motor can directly rotate the roller outer framework.

Thus, the device size of the chassis dynamometer according to this disclosure can be downsized by the saved space for an external motor for driving rotations of the rollers and a power transmission mechanism for the rollers as disposed in the conventional structure in which the external motor for driving the rotations of the rollers is disposed outside of the rollers.

Since the roller device in the chassis dynamometer according to this disclosure further includes the cooler disposed outside the roller, the motor inside the roller outer framework can be effectively cooled by supplying the cooling air to the motor through the roller openings in the roller outer framework.

The objects, features, aspects, and advantages of the present disclosure will become more apparent from the following detailed description and the accompanying drawings.

### BRIEF DESCRIPTION OF DRAWINGS

FIG. 1 schematically illustrates a structure of roller devices to be used in a chassis dynamometer according to an embodiment.
FIG. 2 illustrates a roller driving mechanism in FIG. 1 when viewed from the lateral direction.
FIG. 3 illustrates details of the roller driving mechanism.
FIG. 4 illustrates the torque measurement principle in the roller driving mechanism.
FIG. 5 illustrates details of an internal structure of, for example, a roller in the roller driving mechanism.
FIG. 6 schematically illustrates a cross-sectional structure A-A in FIG. 5.
FIG. 7 schematically illustrates a planar structure of a baffle plate in FIG. 5.
FIG. 8 is a front view illustrating a structure of roller devices to be used in a conventional chassis dynamometer.
FIG. 9 schematically illustrates a torque measurement mechanism (part 1) in the roller driving mechanism in FIG. 8.
FIG. 10 schematically illustrates the torque measurement mechanism (part 2) in the roller driving mechanism.

### DESCRIPTION OF EMBODIMENTS

### [Roller devices 100]

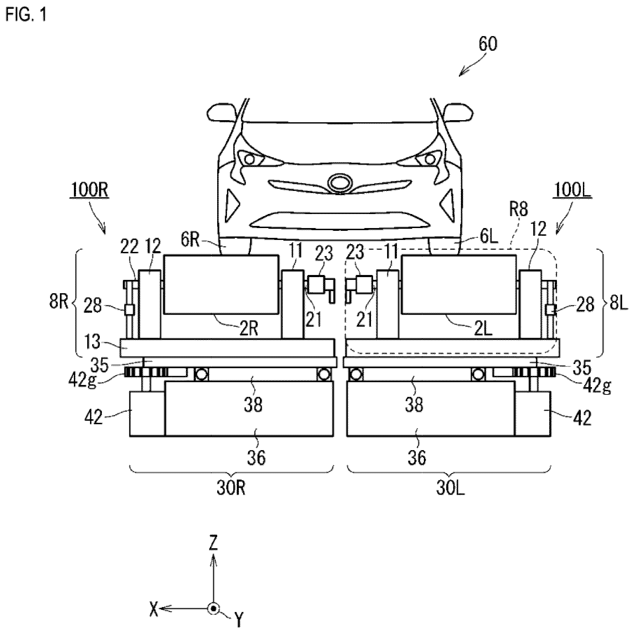

FIG. 1 schematically illustrates a structure of roller devices 100 to be used in a chassis dynamometer 1 according to an embodiment. FIG. 1 is a front view when viewed from the front (+Y direction). FIG. 1 illustrates the XYZ rectangular coordinate system. When a steering operation initiates tire rotation operations of rotating two front-wheel tires 6 (6R, 6L) of the vehicle 60, at least the roller devices 100 in FIG. 1 are used as two front-wheel roller devices.

The roller devices 100 include a roller device 100R for the front-right-wheel tire 6R, and a roller device 100L for the front-left-wheel tire 6L. The roller device 100R includes a roller driving mechanism 8R and a roller rotation mechanism 30R as main constituent elements. The roller device 100L includes a roller driving mechanism 8L and a roller rotation mechanism 30L as main constituent elements. Each of the roller device 100R and the roller device 100L further includes a cooling fan 50 as a cooler that is not illustrated in FIG. 1.

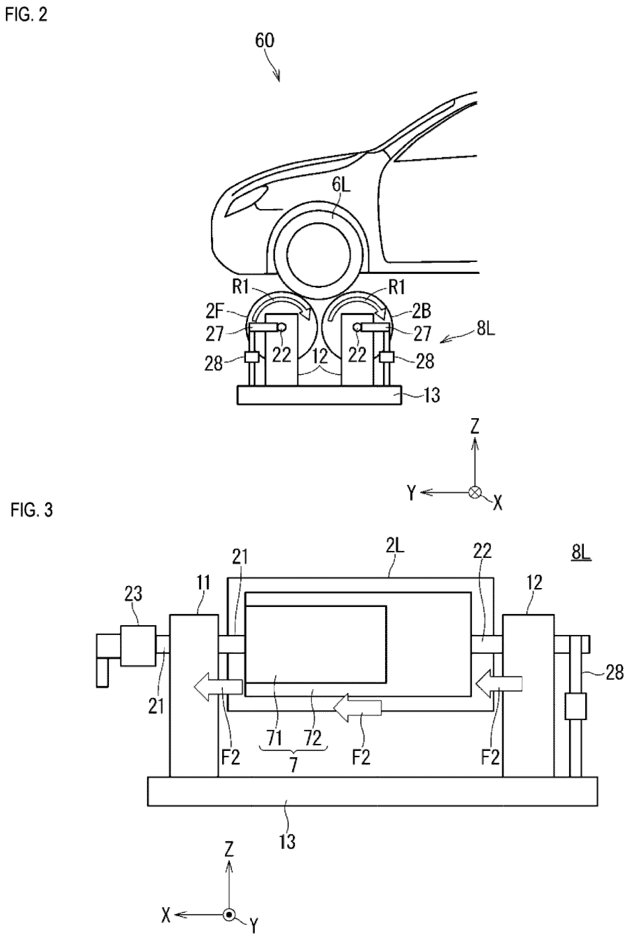

FIG. 2 illustrates the roller driving mechanism 8L when viewed from the lateral direction (-X direction). FIG. 3 illustrates details of the roller driving mechanism 8L. Each of FIGS. 2 and 3 illustrates the XYZ rectangular coordinate system. Of the roller device 100R and the roller device 100L, the roller device 100L will be hereinafter described as a representative with reference to these drawings.

As illustrated in these drawings, the roller device 100L includes a roller rotation mechanism 30L and a roller driving mechanism 8L as main constituent elements.

The roller rotation mechanism 30L includes, as main constituent elements, the fixed base 36, the rotation motor 42, and the rotation bearing 38. The rotation bearing 38 is disposed on the fixed base 36, and the rotation motor 42 is attached adjacent to the side surface of the fixed base 36.

The rotation motor 42 is a motor with gears that can control a speed. The gears 42g are attached at the end of the rotation motor 42 to be engaged in the gears attached around the outer periphery of the rotation base 35. Thus, rotating the rotation motor 42 can rotate the rotation base 35.

The rotation bearing 38 rotatably supports the rotation base 35, and rotates the rotation base 35 with the power of the rotation motor 42, using the center of the rotation bearing 38 as a pivot. As such, the roller rotation mechanism 30L includes the rotation base 35 rotated by the rotation motor 42.

The roller driving mechanism 8L above the roller rotation mechanism 30L rotates in conjunction with the rotation of the rotation base 35 in the roller rotation mechanism 30L. Thus, the roller rotation mechanism 30L can execute a roller rotation operation of rotating rollers 2L.

As such, the roller rotation mechanism 30L executes the roller rotation operation using the roller driving mechanism 8L as a rotation object set. The roller driving mechanism 8L includes, as main constituent elements, rollers 2, the cooling fan 50 to be described later, rotation bearing stands 11, and oscillating bearing stands 12.

Next, the roller driving mechanism 8L will be described. The roller driving mechanism 8L including the rollers 2L is disposed on the rotation base 35.

The roller driving mechanism 8L supporting the twin-roller structure includes, as main constituent elements, a base 13, the rollers 2L, the rotation bearing stands 11, the oscillating bearing stands 12, rotation shafts 21, oscillating shafts 22, torque arms 27, and load cells 28. Here, the rotation shafts 21 are a pair of rotation shafts 21 and the oscillating shafts 22 are a pair of oscillating shafts 22 to correspond to the rollers 2L with a twin-roller structure.

The base 13 is fixed on the rotation base 35, and the rotation bearing stands 11 and the oscillating bearing stands 12 are mounted upright on the base 13. The rotation bearing stands 11 rotatably support the rotation shafts 21, and the oscillating bearing stands 12 pivotably support the oscillating shafts 22.

The rollers 2L are disposed between the rotation bearing stands 11 and the oscillating bearing stands 12. The rotation of the rotation shafts 21 rotates the rollers 2L, as will be described later.

Installing the rotation shafts 21 through the respective centers of the rollers 2L can execute rotation operations of the rollers 2L together with the rotations of the rotation shafts 21. An encoder 23, which directly measures the rotation speed of the roller 2, is attached to the rotation shaft 21. The measurement result of the encoder 23 is used as a feedback signal for controlling a motor 7.

Since the rollers 2L have a twin structure, the roller 2L illustrated in FIGS. 1 and 3 is a front roller 2F or a rear roller 2B in FIG. 2.

The roller rotation mechanism 8L executes a roller rotation operation of rotationally driving the rollers 2L. When the roller 2L is the front roller 2F as a first roller, the roller rotation mechanism 8L rotationally drives the front roller 2F. When the roller 2L is the rear roller 2B as a second roller, the roller rotation mechanism 8L rotationally drives the rear roller 2B.

A stator structure 72 is disposed independently from a motor rotor 71 on rotation operations, to avoid moving in conjunction with a rotation operation of the motor rotor 71. The oscillating shaft 22 is attached to the stator structure 72 that does not move in conjunction with the rotation operation of the motor rotor 71.

As illustrated in FIGS. 1 to 3, the load cell 28 is attached at the end of the oscillating shaft 22 through the torque arm 27 in the roller device 100.

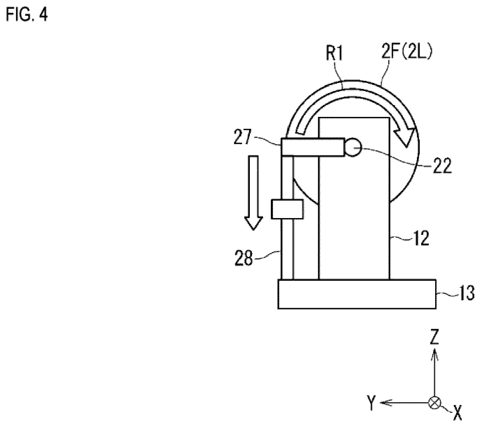

FIG. 4 illustrates the torque measurement principle in the roller driving mechanism 8L. FIG. 4 illustrates the XYZ rectangular coordinate system. As illustrated in FIG. 4, as the front roller 2F (roller 2L) rotates about a roller rotation direction R1 in the driving test on the vehicle 60, a reaction force in the rotation direction of the motor 7 included in the roller 2 is transmitted to the oscillating shaft 22. Thus, the load cell 28 can measure the reaction force of the motor 7.

For example, a reaction force generated from acceleration of the front roller 2F or a force given by the tire 6L to the front roller 2F in the driving test on the vehicle 60 is reflected onto the reaction force of the motor 7. Specifically, when the tire 6 adds a force to the roller 2 in the driving test on the vehicle 60, the reaction force of the motor 7 is transmitted to the oscillating shaft 22 as its oscillating state.

Thus, the load cell 28 connected to the oscillating shaft 22 through the torque arm 27 can measure the reaction force of the motor 7 transmitted to the oscillating shaft 22.

As such, the roller driving mechanism 8L has a torque measurement mechanism including the torque arm 27 and the load cell 28 to correspond to the oscillating shaft 22. As illustrated in FIG. 2, the torque measurement mechanism (the torque arm 27 + the load cell 28) is provided to correspond to the oscillating shaft 22 for each of the front roller 2F and the rear roller 2B.

The roller 2L includes, as main constituent elements, a roller outer framework 10 and the motor 7 inside the roller outer framework. The motor 7 includes, as main constituent elements, the motor rotor 71, the stator structure 72, the rotation shaft 21, and the oscillating shaft 22.

The stator structure 72 is disposed to enclose the motor rotor 71. The rotation shaft 21 is coupled to the motor rotor 71, and the oscillating shaft 22 is coupled to the stator structure 72. The rotation shaft 21 faces the oscillating shaft 22 with respect to the roller 2L.

Thus, the rotation shaft 21 rotates in conjunction with the rotation operation of the motor rotor 71. The stator structure 72 that does not move in conjunction with the rotation operation of the motor rotor 71 is disposed independently from the motor rotor 71 on rotation operations.

The roller device 100R is disposed on the rotation base 35 similarly to the roller device 100L, and includes a roller rotation mechanism 30R and a roller driving mechanism 8R as main constituent elements. The structure of the elements and details of operations in the roller rotation mechanism 30R are identical to those of the roller rotation mechanism 30L. The structure of the elements and details of operations in the roller driving mechanism 8R are identical to those of the roller driving mechanism 8L.

Hereinafter, the roller devices 100L and 100R may be collectively simply referred to as a "roller device 100". The pairs of rollers 20L and 20R may be collectively simply referred to as a "pair of rollers 20". The rollers 2L and 2R may be collectively simply referred to as "rollers 2".

Furthermore, the roller driving mechanisms 8L and 8R may be collectively simply referred to as a "roller driving mechanism 8". The roller rotation mechanisms 30L and 30R may be collectively simply referred to as a "roller rotation mechanism 30".

Although FIGS. 1 to 4 omit the illustration, the chassis dynamometer according to the embodiment also includes a vehicle immobilization mechanism that secures the vehicle 60 placed on the roller devices 100 when a driving test is performed.

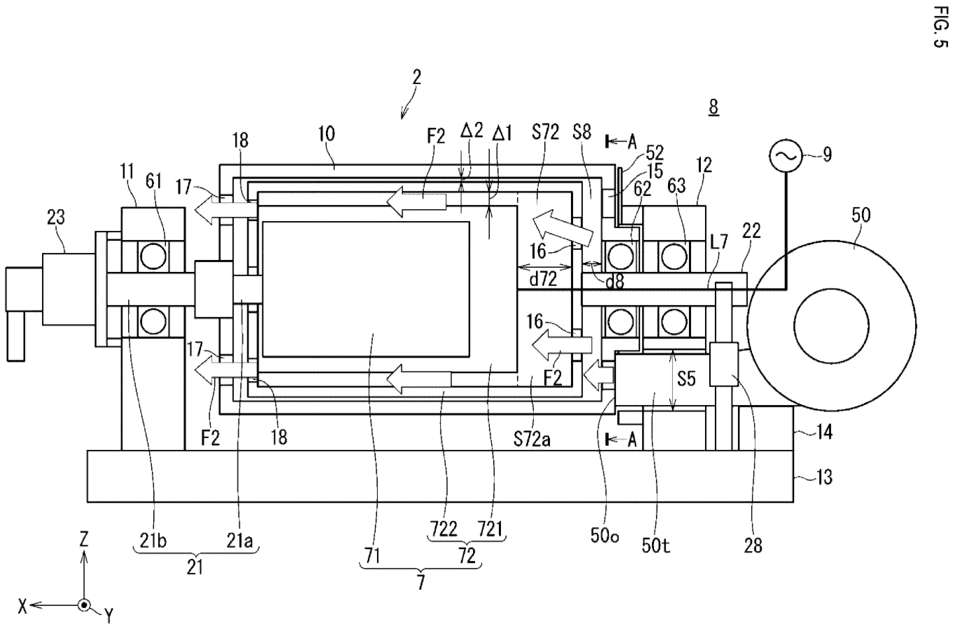

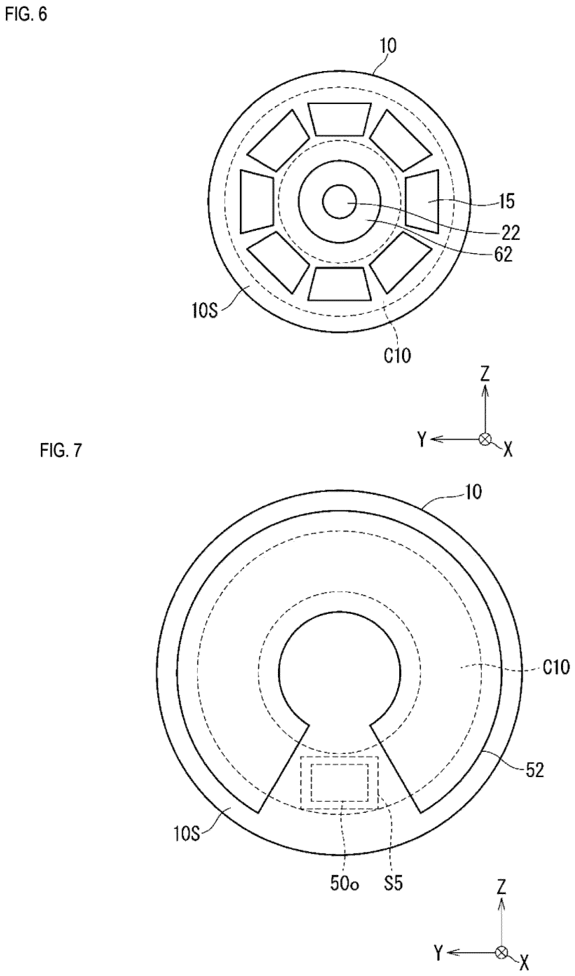

FIG. 5 illustrates details of an internal structure of the roller 2, the rotation bearing stand 11, and the oscillating bearing stand 12 in the roller driving mechanism 8. FIG. 6 schematically illustrates a cross-sectional structure A-A in FIG. 5.

As illustrated in these drawings, the rotation bearing stand 11 includes bearings 61, and rotatably supports the rotation shaft 21 in a state of inserting the rotation shaft 21 into a bearing ring (an inner ring) of these bearings 61. The rotation shaft 21 includes a rotor direct coupling shaft 21a in the roller 2, and a bearing stand holding shaft 21b outside the roller 2. In the rotation shaft 21, the rotor direct coupling shaft 21a is coupled to the bearing stand holding shaft 21b having a hole made in an axial direction, by inserting the rotor direct coupling shaft 21a into this hole. The bearing stand holding shaft 21b also includes a vertically oriented rectangular region in FIG. 5.

The roller outer framework 10 has a cylindrical structure with circular roller bottoms including a first roller bottom closer to the oscillating shaft 22, and a second roller bottom closer to the rotation shaft 21.

Bearings 62 are disposed in a center region of the first roller bottom of the roller outer framework 10. The first roller bottom with the bearings 62 partly protrudes toward the oscillating bearing stand 12.

The rotation shaft 21 is fixed to the center of the second roller bottom of the roller outer framework 10. As such, the rotation shaft 21 that can rotate in conjunction with the rotation operation of the motor rotor 71 is attached to the roller outer framework 10. In other words, the rotation shaft 21 is attached to the roller outer framework 10 so that the roller outer framework 10 can rotate.

The oscillating bearing stand 12 includes bearings 63. The roller outer framework 10 includes the bearings 62 in the center region of the first roller bottom. The roller outer framework 10 and the oscillating bearing stand 12 pivotably support the oscillating shaft 22 in a state of inserting the oscillating shaft 22 into bearing rings (inner rings) of these bearings 62 and 63.

As illustrated in FIG. 5, the stator structure 72 includes, as main constituent element, a motor stator 721 and a motor case 722. The motor stator 721 is disposed around the motor rotor 71. The motor case 722 houses the motor stator 721 while reserving a case internal space S72 between the motor case 722 and the motor stator 721.

The motor stator 721 that does not move in conjunction with the rotation operation of the motor rotor 71 is disposed independently from the motor rotor 71 on rotation operations. The motor case 722 is also disposed independently from the motor rotor 71 on rotation operations, similarly to the motor stator 721. The motor stator 721 and the motor case 722 oscillate with the reaction force of the motor 7.

The motor case 722 has a cylindrical structure with circular case bottoms including a first case bottom closer to the oscillating shaft 22, and a second case bottom closer to the rotation shaft 21.

The end of the oscillating shaft 22 is coupled to the center of the first case bottom of the motor case 722. As such, the oscillating shaft 22 that does not move in conjunction with the rotation operation of the motor rotor 71 is attached to the motor case 722.

As illustrated in FIG. 5, a case external space S8 is provided between the first roller bottom of the roller outer framework 10 and the first case bottom of the motor case 722.

The power for driving the motor 7 is supplied from the AC power supply 9 that is an external AC power supply to the motor 7 in the roller outer framework 10 through a motor line L7. In other words, the motor line L7 electrically connects the AC power supply 9 to the motor 7. A part of the motor line L7 is disposed inside the oscillating shaft 22. In other words, the motor 7 is an AC motor.

A circular roller outer framework bottom 10S of the roller outer framework 10 closer to the oscillating bearing stand 12 in FIG. 6 is the first roller bottom. In the roller outer framework bottom 10S, a plurality of roller openings 15 are discretely disposed around the oscillating shaft 22 and the bearings 62 along a circumferential region C10 about the oscillating shaft 22. The plurality of roller openings 15 are formed through the roller outer framework bottom 10S. As such, the plurality of roller openings 15 are formed along the circumferential region C10 about the oscillating shaft 22.

As illustrated in FIG. 5, a plurality of case openings 16 in communication with the case internal space S72 are formed through the first case bottom of the motor case 722.

The cooling fan 50 as a cooler disposed outside of the roller 2 includes a cooling air outlet body 50t that blows cooling air F2, and a cooling air outlet 50o of the cooling air outlet body 50t is disposed to face a part of the circumferential region C10 of the roller outer framework bottom 10S.

As illustrated in FIG. 5, a duct space S5 is formed through the oscillating bearing stand 12, and the cooling fan 50 is disposed in a state of inserting the cooling air outlet body 50t into the duct space S5. Furthermore, a part of the cooling fan 50 is fixed on a fan mounting base 14 on the base 13.

Thus, the cooling fan 50 as a cooler can supply the cooling air F2 to the case external space S8 through one of the plurality of roller openings 15 of the roller outer framework bottom 10S by blowing the cooling air F2 from the cooling air outlet 50o of the cooling air outlet body 50t. Then, the cooling air F2 can be supplied from the case external space S8 to the case internal space S72 in the roller outer framework 10 through the plurality of case openings 16.

Here, the cooling air F2 blown from the cooling air outlet 50o of the cooling air outlet body 50t is supplied through one of the plurality of roller openings 15 along an axial direction (X direction) of the oscillating shaft 22.

An axial distance d8 that is a Y-direction distance in the case external space S8 is set narrower than an axial distance d72 that is an X-direction distance in an inter-bottom space S72a included in the case internal space S72. The inter-bottom space S72a is a space in the case internal space S72 between the first roller bottom of the roller outer framework 10 and the first case bottom of the motor case 722.

As illustrated in FIG. 5, a baffle plate 52 is disposed over an outlet external region other than a region in the circumferential region C10 in the roller outer framework bottom 10S which faces the cooling air outlet 50o of the cooling air outlet body 50t.

FIG. 7 schematically illustrates a planar structure of the baffle plate 52. FIG. 7 illustrates the XYZ rectangular coordinate system.

As illustrated in FIG. 7, the circumferential region C10 circumferential about the oscillating shaft 22 is formed outside the bearings 62 in the roller outer framework bottom 10S in a plan view of the YZ plane.

The baffle plate 52 is disposed over most of the circumferential region C10. A portion of the circumferential region C10 which is not covered by the baffle plate 52 is limited to the duct space S5 and its vicinity. The cooling air outlet 50o is disposed inside the duct space S5. Thus, the baffle plate 52 is disposed over the outlet external region other than the region in the circumferential region C10 in the roller outer framework bottom 10S which faces the cooling air outlet 50o.

As illustrated in FIG. 5, the roller outer framework 10 includes a plurality of roller openings 17 (second roller openings) formed through the second roller bottom. Thus, roller openings formed through two bottoms of the roller outer framework 10 include the plurality of roller openings 15 (first roller openings) formed through the first roller bottom, and the plurality of roller openings 17 (second roller openings) formed through the second roller bottom.

The motor case 722 includes a plurality of case openings 18 (second case openings) formed through the second case bottom and in communication with the case internal space S72. Thus, case openings formed through two bottoms of the motor case 722 include the plurality of case openings 16 (first case openings) formed through the first case bottom, and the plurality of case openings 18 (second case openings) formed through the second case bottom.

In the chassis dynamometer according to the embodiment, the roller outer framework 10, the motor stator 721, and the motor case 722 have a dimensional characteristic satisfying an inequality (1) below.
$\left(ID2-ED1\right) > \left(ID0-ED2\right)$

In the inequality (1), "ID2" denotes an interior diameter of the motor case 722. "ED1" denotes an external diameter of the motor stator 721. "ID0" denotes an interior diameter of the roller outer framework 10. "ED2" denotes an external diameter of the motor case 722.

FIG. 5 illustrates a difference Δ1 as the left side (ID2 - ED1) in the inequality (1), and a difference Δ2 as the right side (ID0 - ED2) in the inequality (1).

### [Advantages]

Since the roller 2 in the roller device 100 in the chassis dynamometer according to the embodiment includes the motor 7 in the roller outer framework 10, the rotation shaft 21 coupled to the motor rotor 71 of the motor 7 can directly rotate the roller outer framework 10.

Thus, the device size of the chassis dynamometer according to the embodiment can be downsized by the saved space for an external motor outside of the rollers and a power transmission mechanism for the rollers as disposed in the conventional structure in FIG. 8.

In the roller device 200 of the conventional chassis dynamometer in FIG. 8, the roller driving motor 48 corresponds to the external motor, and the reduction gear 5 for the pair of rollers 20 corresponds to the power transmission mechanism for the rollers.

Since the roller outer framework 10 of the roller 2 includes the motor 7, the roller device 100 of the chassis dynamometer according to the embodiment does not require the power transmission mechanism such as the reduction gear 5. Thus, the roller driving mechanism 8 can be significantly downsized in the height direction (Z direction), and the installation space and the cost of the roller device 100 even including the roller rotation mechanism 30 can be reduced.

Furthermore, the roller driving mechanism 8 that is a main constituent element of the roller device 100 in the chassis dynamometer according to the embodiment includes the cooling fan 50 that is a cooler disposed outside the roller 2. Thus, the cooling fan 50 supplies the cooling air F2 to the roller outer framework 10 through one or more of the plurality of roller openings 15 of the roller outer framework 10, so that the motor 7 in the roller outer framework 10 can be effectively cooled.

The cooling fan 50 in the chassis dynamometer according to the embodiment can supply the cooling air F2 to the case internal space S72 through the plurality of roller openings 15 formed through the first roller bottom of the roller outer framework 10 and through the plurality of case openings 16 formed through the first case bottom of the motor case 722.

Thus, directly supplying the cooling air F2 to the surface of the motor stator 721 and an inner surface of the roller outer framework 10 in the chassis dynamometer according to the embodiment can effectively cool the motor 7 and the roller outer framework 10. Providing a fin structure to the surface of the motor stator 721 can enhance the cooling effect.

Thus, the chassis dynamometer according to the embodiment including the motor 7 in the roller 2 can perform the driving test on the vehicle 60 without a hitch.

In the roller 2 of the chassis dynamometer according to the embodiment, the roller outer framework 10, the motor stator 721, and the motor case 722 have the dimensional characteristic satisfying the aforementioned inequality (1). This dimensional characteristic is a characteristic for setting the space volume that needs to be cooled wider than the space volume that need not be cooled in a path of the cooling air F2.

Since the chassis dynamometer according to the embodiment consequently has the aforementioned dimensional characteristic, the motor rotor 71 and the motor stator 721 that are main elements of the motor 7 that needs to be cooled can be effectively cooled.

The plurality of roller openings 15 as the first roller openings are formed along the circumferential region C10 about the oscillating shaft 22. Thus, the cooling fan 50 can reliably supply the cooling air F2 to the case external space S8 through one or more of the plurality of roller openings 15 by blowing the cooling air F2 from the cooling air outlet 50o of the cooling air outlet body 50t even while the roller outer framework 10 is performing the rotation operation.

Since the roller driving mechanism 8 in the chassis dynamometer according to the embodiment includes the baffle plate 52 disposed over the outlet external region other than the region in the circumferential region C10 which faces the cooling air outlet 50o, the cooling air F2 supplied to the case external space S8 does not leak from one or more of the plurality of roller openings 15 to the outside of the roller outer framework 10.

The cooling air F2 blown from the cooling air outlet 50o stays in the case external space S8. Since the baffle plate 52 blocks the outlet external region that occupies most of the circumferential region C10, the cooling air F2 that stays in the case external space S8 is led to the case internal space S72 through the plurality of case openings 16 with high precision without any external leakage.

Consequently, enhancing efficiency of supplying the cooling air F2 from the case external space S8 to the case internal space S72 can enhance the cooling effect on the motor 7 in the chassis dynamometer according to the embodiment.

The chassis dynamometer according to the embodiment includes the plurality of roller openings 17 (second roller openings) in the second roller bottom of the roller outer framework 10, and the plurality of case openings 18 (second case openings) in the second case bottom of the motor case 722. Thus, the plurality of roller openings 15 (first roller openings) can serve as a supply inlet of the cooling air, and the plurality of roller openings 17 can serve as an exhaust outlet of the cooling air F2.

In other words, the roller driving mechanism 8 reserves a path of cooling air through the plurality of roller openings 15, the case external space S8, the plurality of case openings 16 (first case openings), the case internal space S72, the plurality of case openings 18, and the plurality of roller openings 17.

There is a space corresponding to the case external space S8 between the second roller bottom of the roller outer framework 10 and the second roller bottom of the motor case 722. To enhance the emission efficiency of the cooling air F2, the plurality of roller openings 17 and the plurality of case openings 18 are preferably located at positions facing each other on the YZ plane.

As a result, the cooling fan 50 as a cooler flows the cooling air F2 through the path of cooling air to effectively cool the motor 7 disposed in the roller outer framework 10 of the roller 2 in the chassis dynamometer according to the embodiment.

In the chassis dynamometer according to the embodiment, the roller rotation mechanism 30 rotates the roller driving mechanism 8 as a rotation object set, so that the variety of the vehicles 60 can be tested which involves roller rotation operations. As described above, the roller driving mechanism 8 includes the roller 2, the cooling fan 50, the rotation bearing stand 11, and the oscillating bearing stand 12 as main constituent elements.

The load cell 28 coupled to the oscillating shaft 22 through the torque arm 27 measures the reaction force of the motor 7 transmitted to the oscillating shaft 22 in the chassis dynamometer according to the embodiment. The reaction force of the motor 7 in the driving test on the vehicle 60 is accurately reflected onto an oscillating state of the oscillating shaft 22.

Thus, the load cell 28 can measure the reaction force of the motor 7 in the driving test on the vehicle 60 in the chassis dynamometer according to the embodiment.

The roller device 100 in the chassis dynamometer according to the embodiment further includes the encoder 23 attached to the rotation shaft 21. The encoder 23 directly measures the rotation speed of the roller 2.

Since the rotation shaft 21 directly rotates the roller outer framework 10 in the roller device 100, the encoder 23 can measure the rotation speed of the rotation shaft 21 as the rotation speed of the roller 2 as it is with high precision.

The roller driving mechanism 8 in the roller device 100 in the chassis dynamometer according to the embodiment includes the AC power supply 9 and the motor line L7 for the motor 7 that is an AC motor.

Thus, the AC power supply 9 disposed outside the roller 2 can supply AC power to the motor 7 disposed inside the roller 2 through the motor line L7 partly in the oscillating shaft 22 without a hitch, in the chassis dynamometer according to the embodiment.

Although the present disclosure is described in detail, the foregoing description is in all aspects illustrative and not restrictive of the disclosure. Therefore, numerous modifications and variations that have not yet been exemplified can be devised without departing from the scope of the present disclosure.

Although the roller device 100 is described in the embodiment as a device on which the front-wheel tire 6 of the vehicle 60 is placed, the roller device 100 may be a device on which the rear-wheel tire 6 of the vehicle 60 is placed. Furthermore, when rollers on which one set of the tires 6, that is, the front-wheel tires 6 or the rear-wheel tires 6 of the vehicle 60 are placed are free rollers, the free rollers do not require the roller devices 100.

The roller device 100 on which, of the front-wheel tire 6 and the rear-wheel tire 6, the front-wheel tire 6 is placed generally includes the roller rotation mechanism 30.

### EXPLANATION OF REFERENCE SIGNS

6, 6L, 6R tire
2, 2L, 2R roller
7 motor
8, 8L, 8R roller rotation mechanism
9 AC power supply
27 torque arm
28 load cell
11 rotation bearing stand
12 oscillating bearing stand
15, 17 roller opening
16, 18 case opening
30, 30L, 30R roller rotation mechanism
50 cooling fan
50o cooling air outlet
52 baffle plate
60 vehicle
71 motor rotor
72 stator structure
100, 100L, 100R roller device
721 motor stator
722 motor case
C10 circumferential region
L7 motor line

## Claims

1. A chassis dynamometer comprising a roller device,
the roller device including:
a roller on which a tire of a vehicle is placed; and
a cooler disposed outside the roller,
the roller including:
a roller outer framework; and
a motor disposed inside the roller outer framework,
the motor including:
a motor rotor;
a stator structure disposed around the motor rotor;
a rotation shaft coupled to the motor rotor; and
an oscillating shaft coupled to the stator structure, the rotation shaft facing the oscillating shaft with respect to the roller,
the roller device further including:
a rotation bearing stand rotatably supporting the rotation shaft; and
an oscillating bearing stand pivotably supporting the oscillating shaft, wherein
the rotation shaft rotates in conjunction with a rotation operation of the motor rotor,
the oscillating shaft does not move in conjunction with the rotation operation of the motor rotor,
the rotation shaft is attached to the roller outer framework so that the roller outer framework can rotate,
the roller outer framework includes a roller opening, and
the cooler supplies cooling air to the motor through the roller opening of the roller outer framework.

2. The chassis dynamometer according to claim 1, wherein the stator structure includes:
a motor stator disposed around the motor rotor; and
a motor case housing the motor stator with a case internal space being reserved between the motor case and the motor stator,
the motor case includes a case opening in communication with the case internal space, and
the cooler supplies the cooling air to the case internal space through the roller opening and the case opening.

3. The chassis dynamometer according to claim 2, wherein
the roller outer framework has a cylindrical structure with circular roller bottoms including a first roller bottom closer to the oscillating shaft, and a second roller bottom closer to the rotation shaft,
the motor case has a cylindrical structure with circular case bottoms including a first case bottom closer to the oscillating shaft, and a second case bottom closer to the rotation shaft,
the roller outer framework includes a first roller opening formed through the first roller bottom, and the roller opening includes the first roller opening,
the motor case includes a first case opening formed through the first case bottom and in communication with the case internal space, and the case opening includes the first case opening,
the cooler supplies the cooling air through the first roller opening along an axial direction of the oscillating shaft, and
the motor case, the motor stator, and the roller outer framework satisfy a dimensional characteristic {(ID2 - ED1) > (ID0 - ED2)} when "ID2" denotes an interior diameter of the motor case, "ED1" denotes an external diameter of the motor stator, "ID0" denotes an interior diameter of the roller outer framework, and "ED2" denotes an external diameter of the motor case.

4. The chassis dynamometer according to claim 3, wherein
the first roller opening is formed through the first roller bottom along a circumferential region about the oscillating shaft,
the cooler includes a cooling air outlet blowing the cooling air, the cooling air outlet being disposed to face a part of the circumferential region, and
the roller device further includes
a baffle plate disposed over an outlet external region other than a region in the circumferential region which faces the cooling air outlet.

5. The chassis dynamometer according to claim 3 or 4, wherein
the roller outer framework includes a second roller opening formed through the second roller bottom, and the roller opening includes the second roller opening, and
the motor case includes a second case opening formed through the second case bottom and in communication with the case internal space, and the case opening includes the second case opening.

6. The chassis dynamometer according to any one of claims 1 to 5, wherein
the roller device further includes
a roller rotation mechanism rotating a rotation object set including the roller, the cooler, the rotation bearing stand, and the oscillating bearing stand.

7. The chassis dynamometer according to any one of claims 1 to 6, wherein
the roller device further includes
a load cell coupled to the oscillating shaft through a torque arm, the load cell measuring a reaction force of the motor in rotating the roller.

8. The chassis dynamometer according to any one of claims 1 to 7, wherein
the roller device further includes
an encoder attached to the rotation shaft, the encoder measuring a rotation speed of the roller.

9. The chassis dynamometer according to any one of claims 1 to 8, wherein
the motor is an AC motor,
the roller device further includes:
an AC power supply disposed outside the roller and supplying power; and
a motor line electrically connecting the AC power supply to the motor, and
a part of the motor line is disposed inside the oscillating shaft.
